# EUROPÄISCHE PATENTANMELDUNG

(11) **EP 1 382 645 A1**
(43) Veröffentlichungstag der Anmeldung: **21.01.2004**
(21) Anmeldenummer: 03012964.7
(22) Anmeldetag: 07.06.2003
(51) Int. Cl.: C09D 5/16, C09D 167/00, C08L 63/00

(54) **Transparente oder pigmentierte Pulverlacke auf Basis bestimmter carboxylgruppenhaltiger Polyester mit Hydroxyalkylamiden und Verwendung**

(30) Priorität: 20.07.2002 DE 10233010
(71) Anmelder: Degussa AG, 40474 Düsseldorf (DE)
(72) Erfinder: Wenning, Andreas, Dr., 48301 Nottuln (DE)

(57) **Zusammenfassung**

Transparente oder pigmentierte Pulverlacke auf Basis bestimmter carboxylgruppenhaltiger Polyester mit Hydroxyalkylamiden und Verwendung.

Die Erfindung betrifft transparente oder pigmentierte Pulverlacke auf Basis spezieller carboxylgruppenhaltiger Polyester mit β-Hydroxyalkylamiden sowie die Verwendung.

## Beschreibung

Die Erfindung betrifft transparente oder pigmentierte Pulverlacke auf Basis spezieller carboxylgruppenhaltiger Polyester mit β-Hydroxyalkylamiden sowie die Verwendung.

Pulverlacke auf Basis Triglycidylisocyanurat (TGIC) und säurefunktionellen Polyestern ergeben korrosionsbeständige und wetterstabile Pulverbeschichtungen. Die EP 0 536 085 beschreibt jedoch, dass zur Herstellung des TGIC in fester Form teure Verfahren oder ein relativ großer und somit ebenfalls teurer Reinigungsaufwand erforderlich sind. Zudem wird TGIC von der Europäischen Gemeinschaft als mutagen der Kategorie II ("sollte als erbgutverändemd angesehen werden") eingestuft und ist seit dem 31. Mai 1998 als giftig zu kennzeichnen.

Toxikologisch unbedenklich und zugleich auch reaktiver sind β-Hydroxyalkylamide als Vernetzer. In den Patentschriften US 4,076,917 und US 4,101,606 werden β-Hydroxyalkylamide mit Polymeren, die mindestens eine carboxyl- oder Anhydridfunktion aufweisen, insbesondere mit Polyacrylaten zu Pulverlacken kombiniert. Die Patentschrift US 4,988,767 beschreibt Pulverlacke auf Basis von Hydroxyalkylamiden und sauren Acrylatharzen.

Die EP 0 322 834 beschreibt wärmehärtende Pulverlacke, die aus Säuregruppen enthaltenden Polyestern und β-Hydroxyalkylamiden zusammengesetzt sind. Diese Beschichtungen mit β-Hydroxyalkylamid-Vemetzer sind hochwetterstabil, sehr flexibel, hart und Chemikalien resistent. Die carboxylgruppenenthaltenden Polyester werden aus aliphatischen und/oder cycloaliphatischen Polyolen mit aliphatischen und/oder cycloaliphatischen Polycarbonsäuren und Anhydriden hergestellt.

Die EP 0 649 890 beschreibt Beschichtungssysteme aus β-Hydroxyalkylamiden und carboxylfunktionellen Polyestern, die aus aliphatischen Diolen, Polyolen und Dicarbonsäuren hergestellt werden, wobei die Dicarbonsäure-Komponente zu mindestens 80 % aus Isophthalsäure besteht.

Pulverlacke mit verbesserter physikalischer Alterungsbeständigkeit beschreibt die EP 0 664 325. Diese Pulverlacke basieren auf linearen carboxylfunktionellen Polyestern und polyfunktionellen Epoxiden und/oder β-Hydroxyalkylamiden. Der saure Polyester enthält maximal 10-Mol-% Isophthalsäure bezogen auf die Summe aller eingesetzten Carbonsäuren.

Alle genannten Pulverlacke auf Basis eines β-Hydroxyalkylamids als Vernetzer, enthalten carboxylfunktionelle Polyester, die durch Polykondensation eines Polyols mit einer Dicarbonsäure oder einer Dicarbonsäure und einem Anhydrid hergestellt werden.

Die Aufgabe der vorliegenden Erfindung war es Pulverlacke bereitzustellen, die gegenüber dem Stand der Technik verbilligte saure Polyester enthalten und deren Beschichtungen nach Vernetzung mit einem β-Hydroxyalkylamid ein unverändert hohes mechanisches und außenbeständiges Eigenschaftsprofil behalten.

Überraschenderweise wurde gefunden, dass Beschichtungen aus β-Hydroxyalkylamid-Vernetzern und speziellen carboxylfunktionellen Polyestern, die durch Polykondensation von Alkoholen mit Carbonsäuren und Carbonsäureestern hergestellt werden, preisgünstiger und sogar verbesserte technologische Eigenschaften aufweisen.

Gegenstand der Erfindung ist ein transparenter oder pigmentierter Pulverlack auf der Basis mindestens eines carboxylgruppenhaltigen Polyesters und mindestens eines β-Hydroxyalkylamids,
wobei der Polyester hergestellt wird durch Kondensation von
A) mindestens einem aliphatischen und/oder cycloaliphatischen Di- und/oder Polyol mit
B) mindestens einer aliphatischen und/oder cycloaliphatischen und/oder aromatischen Diund/oder Polycarbonsäure
   und
C) mindestens einem aliphatischen und/oder cycloaliphatischen und/oder aromatischen Diund/oder Polycarbonsäureester;
und dieser Polyester eine Glasübergangstemperatur von 30 bis 90 °C und eine Säurezahl von 10 bis 150 mg KOH/g aufweist.

Gegenstand der vorliegenden Erfindung ist die Verwendung eines carboxylgruppenhaltigen Polyesters mit β-Hydroxyalkylamiden zur Herstellung transparenter oder pigmentierter Pulverlacke,
wobei der Polyester hergestellt wird durch Kondensation von
A) mindestens einem aliphatischen und/oder cycloaliphatischen Di- und/oder Polyol mit
B) mindestens einer aliphatischen und/oder cycloaliphatischen und/oder aromatischen Diund/oder Polycarbonsäure und
C) mindestens einem aliphatischen und/oder cycloaliphatischen und/oder aromatischen Diund/oder Polycarbonsäureester;
   und dieser Polyester eine Glasübergangstemperatur von 30 bis 90 °C und eine Säurezahl
   von 10 bis 150 mg KOH/g aufweist.

Die sauren Polyester können aus an sich bekannter Weise durch Kondensation in einer Intertgasatmosphäre bei Temperaturen von 100 bis 260 °C, vorzugsweise von 130 bis 220 °C in der Schmelze oder in azeotroper Fahrweise gewonnen werden, wie es z. B. in Methoden der Organischen Chemie (Houben-Weyl), Bd. 14/2, 1 - 29, 40 - 47, Georg Thieme Verlag, Stuttgart, 1963 oder bei C. R. Martens, Alkyd Resins, 51-59, Reinhold Plastics Appl., Series, Reinhold Publishing Comp., New York, 1961 beschrieben ist.

Erfindungswesentlich ist die Verwendung einer Kombination aus mindestens einer aliphatischen und/oder cycloaliphatischen und/oder aromatischen Di- und/oder Polycarbonsäure und einem aliphatischen und/oder cycloaliphatischen und/oder aromatischen Di- und/oder Polycarbonsäureester. Dabei ist es unerheblich, welche Alkoholkomponente zur Veresterung der Di- oder Polycarbonsäure verwendet wird. Bevorzugt werden Methylester eingesetzt.

Als Beispiele für die Herstellung von Polyestem verwendete Carbonsäuren seien genannt: Bernstein-, Adipin-, Kork-, Azelain, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Glutarsäure, 1,4-Cyclohexandicarbonsäure bzw. deren Ester. Besonders gut geeignet sind Isophthalsäure, Terephthalsäure, Hexahydroterephthalsäure, Hexahydrophthalsäure, Adipinsäure, Bemsteinsäure bzw. deren Ester.

Als Polyole zur Herstellung der Polyester kommen z. B. Monoethylenglykol, 1,2- und 1,3-Propylenglykol, 1,4- und 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), Bis-(1,4-hydroxymethyl)-cyclohexan, 2,2-Bis-(4-hydroxycyclohexyl)-propan, 2,2-Bis-[4-(β-hydroxyethoxy)-phenyl]-propan, 2-Methyl-propandiol-1,3, 2-Methyl-pentandiol-1,5, 2,2,4(2,4,4)-Trimethylhexandiol-1,6, Glyzerin, Trimethylolpropan, Trimethylolethan, Hexantriol-1,2,6, Butantriol-1,2,4, Tris-(β-hydroxyethyl)-isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylenglykol und Hydroxypivalinsäureneopentylglykolester, in Frage.

Bevorzugte Alkohole sind Monoethylenglykol, Butandiol-1,4, Pentandiol,-1,5, Hexandio1-1,6, Neopentylglykol, Bis-(1,4-hydroxymethyl)-cyclohexan, 2,2,4 (2,4,4)-Trimethylhexandiol-1,6, Hydroxypivalinsäureneopentylglykolester, Trimethylolpropan und Glyzerin.

So hergestellt amorphe Polyester haben eine Glasübergangstemperatur von 30 bis 90 °C und eine Säurezahl von 10 bis 150 mg KOH/g.

Die β-Hydroxyalkylamide sind prinzipiell bekannt und z. B. in EP 0 957 082, US 4,076,917, US 4,101,606, EP 0 322 834, WO 00/55 266, DE 100 04 136, EP 0 957 082, EP 1 203 763 beschrieben.

Als β-Hydroxyalkylamide sind insbesondere VESTAGON EP-HA 320 der Fa. Degussa, PRIMID XL-552, PRIMID QM 1260 und PRIMID SF 4510 der Fa. EMS und PROSID H und PROSID S der Fa. SIR Industriale genannt.

Die Struktur kann folgendermaßen beschrieben werden: 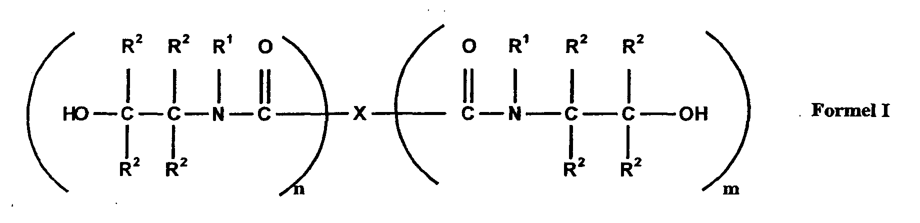 wobei die Substituenten die folgenden Bedeutungen aufweisen:
- X:: chemische Bindung, Wasserstoff oder eine einwertige oder mehrwertige organische Gruppe, abgeleitet aus gesättigten, ungesättigten oder aromatischen Kohlenwasser-stoffgruppen,
mit 1 - 24 Kohlenstoffatomen oder diese heteroatomsubstituierten Reste;
- R¹:: Wasserstoff, Alkyl-, Alkenyl-, Aryl- oder Aralkylrest mit 1-24 Kohlenstoffatomen, diese heteroatomsubstituierten Reste oder

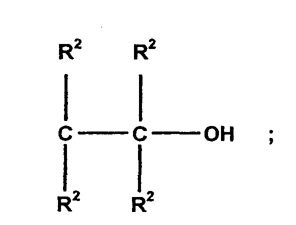

- R²:: unabhängig voneinander gleiche oder verschiedene Reste, ausgewählt aus Wasserstoff, Alkyl-, Aryl-, Aralkyl- oder Alkenylrest mit 1-24 Kohlenstoffatomen oder diese heteroatomsubstituierten Reste;
- n:: ganze Zahl von 1-10;

- m:: ganze Zahl von 0-2;
n + m: ≥ 2

Bevorzugte Verbindungen, die zur Herstellung der erfindungsgemäßen Pulverlacke eingesetzt werden, werden gemäß der EP 0 957 082 hergestellt und auf der Seite 4 der A2-Schrift genannt.

Die Polyester, die aus mindestens einer Polycarbonsäure und mindestens einem Pölycarbonsäureester hergestellt werden, und die ß-Hydroxyalkylamide sind als Bindemittel für thermohärtende Lacke, insbesondere Pulverlacke geeignet.

Das Mischungsverhältnis des carboxylgruppenhaltigen Polyesters und der β-Hydroxyalkylamid-Verbindung wird in der Regel so gewählt, dass das Verhältnis Carboxylgruppen zu Hydroxylgruppen 0,4 : 1 bis 2,0 : 1 beträgt.

Die in den Pulverlacken enthaltenden Hilfs- und Zuschlagstoffe sind z. B. Verlaufinittel, Entgasungsmittel, Füllstoffe, Farbstoffe, Katalysatoren, Licht- und Hitzestabilisatoren, Antioxidantien und/oder Effektadditive. Diese sind üblicherweise in Mengen von 0,5 bis 50 Gew.-% enthalten.

Zur Herstellung der gebrauchsfertigen Pulverlacke werden der saure Polyester und das β-Hydroxyalkylamid, gegebenenfalls mit Pigmenten oder Füllstoffen wie z. B. TiO₂ oder Bariumsulfat und weiteren für Pulverlacke üblichen Zuschlag- oder Hilfsstoffen wie z. B. Verlaufmittel wie z. B. Polybutylacrylat oder Entgasungsmittel wie Benzoin, gemischt. Alle Inhaltsstoffes des Pulverlackes werden in der Schmelze homogenisiert. Dies kann in geeigneten Aggregaten, wie z. B. beheizbaren Knetern, vorzugsweise jedoch durch Extrudieren, erfolgen, wobei Temperaturobergrenzen von 140 °C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, wie z. B. durch elektrostatisches oder tribostatisches Pulversprühen, Wirbelsintern, elektrostatisches Wirbelsintern, erfolgen.

Nach dem Pulverauftrag werden die beschichteten Werkstücke zur Aushärtung 60 bis 5 Minuten auf eine Temperatur von 140 bis 220 °C erhitzt.

Die Pulverlacke auf Basis von sauren Polyestem und β-Hydroxyalkylamiden, die Stand der Technik sind, haben den Nachteil, dass die eingesetzten Polyester auf Polycarbonsäuren sowie deren Anhydride basieren.

Dadurch ergibt sich im Vergleich zur erfindungsgemäßen Pulverlacken aus sauren Polyestern, die aus Di- und/oder Polyolen und einer Kombination von Carbonsäuren und Carbonsäureestern hergestellt werden, höhere Herstellkosten für die Polyester. Dieser Preis erhöht unerwünschterweise die Pulverlackkosten für den Beschichter.

Ein technologischer Nachteil beim Einsatz der erfindungsgemäß verwendeten Polyester in Pulverlacken ist nicht zur Zeit erkennbar. Im Gegenteil: Mitunter besitzen die aus diesen sauren Polyestern hergestellten Beschichtungen neben einem Vorteil in den Rohstoffkosten sogar technologische Vorteile.

Bei Einsatz von Gemischen aus Carbonsäure und Carbonsäureester zur Herstellung von Polyestem besitzen diese Polyester weniger unerwünschte COOMe-Endgruppen, weil ein Carbonsäureester eine höhere Reaktionsgeschwindigkeit gegenüber Alkoholen hat als eine Carbonsäure. Dadurch werden bei der Polyesterherstellung weniger Kettenabbrüche initiiert. Somit sind höhere Molmasse im Polyester erzielbar, was prinzipiell die Flexibilität im Lack verbessert.

Zudem lässt sich Polyester gezielter aufbauen, wenn verschiedene Carbonsäuren bzw. deren Ester eingesetzt werden. Als Beispiel sei angeführt, dass durch die Verwendung von Dimethylterephthalat und Isophthalsäure ein gerader Strukturaufbau in der Kettenmitte (Dimethylterephthalat) und eine Verwinkelung von Isophthalsäureeinheiten an den Kettenenden verwirklicht werden kann. Ein derartig aufgebauter Polyester hat eine bessere Haftung im Lack als ein statistisch aufgebauter Polyester aus Terephthalsäure und Isophthalsäure.

Des weiteren haben die Polyesterketten, die neben Polyolen aus Gemischen einer Carbonsäure und eines Carbonsäureesters hergestellt werden, höhere Anlagerungsmöglichkeiten. Die dadurch stärkere π-π-Wechselwirkung bedingt eine höhere Chemikalienbeständigkeit des Lackes.

Nachfolgend wird der Gegenstand der Erfindung anhand von Beispielen erläutert.

### Beispiele

### 1. Eingesetzte Rohstoffe

### 1.1 Saures Polymer

In einem 3 1-Dreihalskolben, der mit einem Rührer, einer Destillationskolonne und einen Einlass für Stickstoffgas ausgerüstet war, wurden 35 g Monoethylenglykol, 405 g Neopentylglykol, 691 g Dimethylterephthalat und 100 ppm Titantetraisopropoxid gegeben. Nach dem Aufheizen unter Stickstoffzufuhr auf 170 °C begann Methanol zu sieden und wurde abdestilliert. Nachdem die Säurezahl auf unter drei gefallen war, wurden 148 g Isophthalsäure zugegeben. Die Mischung wurde drei Stunden lang auf 200 °C aufgeheizt. Der resultierende Polyester hatte eine Säurezahl von 35 mg KOH/g, eine Hydroxylzahl von < 1 mg KOH/g und eine Glasübergangstemperatur von 57 °C.

### 1.2 Saures Polymer

In einem 3 1-Dreihalskolben, der mit einem Rührer, einer Destillationskolonne und einen Einlass für Stickstoffgas ausgerüstet war, wurden 34 g Monoethylenglykol, 397 g Neopentylglykol, 9 g Trimethylolpropan, 672 g Dimethylterephthalat und 100 ppm Titantetraisopropoxid gegeben. Nach dem Aufheizen unter Stickstoffzufuhr auf 170 °C begann Methanol zu sieden und wurde abdestilliert. Nachdem die Säurezahl auf unter drei gefallen war, wurden 167 g Terephthalsäure zugegeben. Die Mischung wurde drei Stunden lang auf 200 °C aufgeheizt. Der resultierende Polyester hatte eine Säurezahl von 38 mg KOH/g, eine Hydroxylzahl von < 1 mg KOH/g und eine Glasübergangstemperatur von 56 °C.

### 1.3 β-Hydroxyalkylamid

Als β-Hydroxyalkylamid wurde das VESTAGON® EP-HA 320 (OH-Zahl 668 mg KOH/g, Degussa AG) eingesetzt.

### 2. Pulverlacke

### 2.1 Allgemeine Herstellungsvorschrift

Die zerkleinerten Produkte, d. h. saurer Polyester, β-Hydroxyalkylamid-Verbindung, Verlaufinittel, Entgasungsmittel wurden mit dem Weißpigment in einem Kollergang innig vermischt und anschließend in einem Zweischneckenextruder der Fa. Berstorff bis maximal 140 °C homogenisiert. Nach dem Erkalten wird das Extrudat gebrochen und mit einer Stiftmühle auf eine Korngröße < 100 µm gemahlen. Das so hergestellte Pulver wird mit einer elektrostatischen Pulverspritzanlage bei 60 KV auf entfettete, ggf. vorbehandelte Eisenbleche appliziert und in einem Umlufttrockenschrank bei Temperaturen zwischen 140 und 220 °C eingebrannt.
Die Abkürzungen in den folgenden Tabellen bedeuten:
- SD: = Schichtdicke in µm
- ET: = Tiefung nach Erichsen (DIN 53 156)
- GS: = Gitterschnittprüfüng (DIN 53 151)
- GG 60 °-Winkel: = Messung des Glanzes n. Gardner (ASTM-D 5233)
- Imp rev.: = Impact reverse inch-lb

### 2.2 Lacktechnische Prüfung

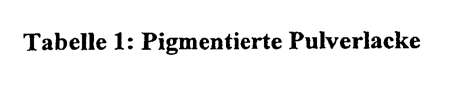

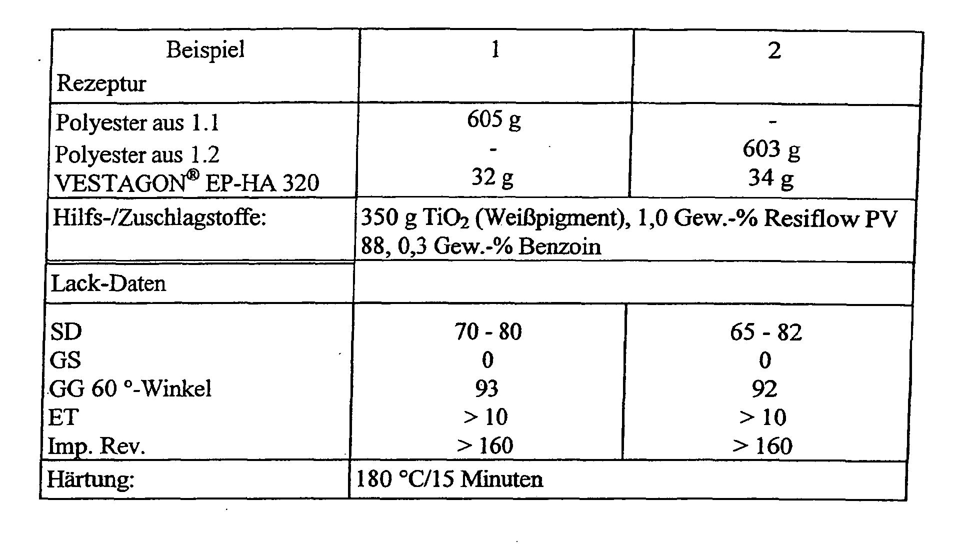

## Patentansprüche

1. Transparenter oder pigmentierter Pulverlack auf der Basis mindestens eines carboxylgruppenhaltigen Polyesters und mindestens eines β-Hydroxyalkylamids,
wobei der Polyester hergestellt wird durch Kondensation von
A) mindestens einem aliphatischen und/oder cycloaliphatischen Di- und/oder Polyol mit
B) mindestens einer aliphatischen und/oder cycloaliphatischen und/oder aromatischen Di- und/oder Polycarbonsäure
und
C) mindestens einem aliphatischen und/oder cycloaliphatischen und/oder aromatischen Di- und/oder Polycarbonsäureester;
und dieser Polyester eine Glasübergangstemperatur von 30 bis 90 °C und eine Säurezahl von 10 bis 150 mg KOH/g aulweist.

2. Transparenter oder pigmentierter Pulverlack nach Anspruch 1,
**dadurch gekennzeichnet,**
**dass** der Polyester hergestellt wird durch Kondensation von
A) mindestens einem aliphatischen und/oder cycloaliphatischen Di- und/oder Polyol mit
B) mindestens einer aliphatischen und/oder aromatischen Di- und/oder Polycarbonsäure und
C) mindestens einem aliphatischen und/oder aromatischen Di- und/oder Polycarbonsäureester,
und dieser Polyester eine Glasübergangstemperatur von 30 bis 90 °C und eine Säurezahl von 10 bis 150 mg KOH/g aufweist.

3. Transparenter oder pigmentierter Pulverlack nach Anspruch 1,
**dadurch gekennzeichnet,**
**dass** der Polyester hergestellt wird durch Kondensation von
A) mindestens einem aliphatischen und/oder cycloaliphatischen Di- und/oder Polyol mit
B) mindestens einer aromatischen Di- und/oder Polycarbonsäure und
C) mindestens einem aromatischen Di- und/oder Polycarbonsäureester, und dieser Polyester eine Glasübergangstemperatur von 30 bis 90 °C und eine Säurezahl von 10 bis 150 mg KOH/g aufweist.

4. Transparenter oder pigmentierter Pulverlack nach mindestens einem der vorherigen Ansprüche,
**dadurch gekennzeichnet,**
**dass** die Komponente A ausgewählt wird aus mindestens einem der Polyole Monoethylenglykol, 1,2-Propylenglykol, 1,3-Propylenglykol, 1,4-Butylenglykol, 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), Bis-(1,4-hydroxymethyl)-cyclohexan, 2,2-Bis-(4-hydroxycyclohexyl)-propan, 2,2-Bis-[4-(β-hydroxyethoxy)-phenyl]-propan, 2-Methyl-propandiol-1,3, 2-Methyl-pentandiol-1,5, 2,2,4(2,4,4)-Trimethylhexandiol-1,6, Glyzerin, Trimethylolpropan, Trimethylolethan, Hexantriol-1,2,6, Butantriol-1,2,4, Tris-(ß-hydroxyethyl)-isocyanurat, Pentaerythrit, Mannit, Sorbit, Diethylenglykol, Triethylenglykol, Tetraethylenglykol, Dipropylenglykol, Polypropylenglykole, Polybutylenglykole, Xylylenglykol oder Hydroxypivalinsäureneopentylglykolester.

5. Transparenter oder pigmentierter Pulverlack nach mindestens einem der vorherigen Ansprüche,
**dadurch gekennzeichnet,**
**dass** als Komponente B mindestens eine der Carbonsäuren ausgewählt aus Bernstein-, Adipin-, Kork-, Azelain, Sebacin-, Phthal-, Terephthal-, Isophthal-, Trimellit-, Pyromellit-, Tetrahydrophthal-, Hexahydrophthal-, Hexahydroterephthal-, Dichlorphthal-, Tetrachlorphthal-, Endomethylentetrahydrophthal-, Glutarsäure oder 1,4-Cyclohexandicarbonsäure enthalten ist.

6. Transparenter oder pigmentierter Pulverlack nach mindestens einem der vorherigen Ansprüche,
**dadurch gekennzeichnet,**
**dass** als Komponente B mindestens eine der Carbonsäuren Isophthalsäure, Terephthalsäure, Hexahydroterephthalsäure, Hexahydrophthalsäure, Adipinsäure oder Bernsteinsäure enthalten ist.

7. Transparenter oder pigmentierter Pulverlack nach mindestens einem der vorherigen Ansprüche,
**dadurch gekennzeichnet,**
**dass** als Komponente B mindestens eine der Carbonsäuren Isophthalsäure oder Terephthalsäure enthalten ist.

8. Transparenter oder pigmentierter Pulverlack nach mindestens einem der vorherigen Ansprüche,
**dadurch gekennzeichnet,**
**dass** als Komponente C mindestens ein Carbonsäureester ausgewählt aus Bernstein-, Adipin-, Kork-, Azelain, Sebacin-, Phthal-, Terephthal-, Isophthal-, Trimellit-, Pyromellit-, Tetrahydrophthal-, Hexahydrophthal-, Hexahydroterephthal-, Dichlorphthal-, Tetrachlorphthal-, Endomethylentetrahydrophthal-, Glutarsäure, 1,4-Cyclohexandicarbonsäureester enthalten ist.

9. Transparenter oder pigmentierter Pulverlack nach mindestens einem der vorherigen Ansprüche,
**dadurch gekennzeichnet,**
**dass** als Komponente C mindestens ein Carbonsäurenester ausgewählt aus Isophthalsäure-, Terephthalsäure-, Hexahydroterephthalsäure-, Hexahydrophthalsäure-, Adipinsäure- oder Bemsteinsäureester enthalten ist.

10. Transparenter oder pigmentierter Pulverlack nach mindestens einem der vorherigen Ansprüche,
**dadurch gekennzeichnet,**
**dass** als Komponente C mindestens ein Carbonsäureester ausgewählt aus Isophthalsäureoder Terephthalsäureester enthalten ist.

11. Transparenter oder pigmentierter Pulverlack nach mindestens einem der vorherigen Ansprüche,
**dadurch gekennzeichnet,**
**dass** als β-Hydroxyalkylamid VESTAGON EP-HA 320, PRIMID *XL-552,* PRIMID QM 1260, PRIMID SF 4510, PROSID H oder PROSID S enthalten ist.

12. Transparenter oder pigmentierter Pulverlack nach mindestens einem der vorherigen Ansprüche,
**dadurch gekennzeichnet,**
**dass** Hilfs- und Zuschlagstoffe ausgewählt aus der Gruppe der Verlaufmittel, Entgasungsmittel, Füllstoffe, Farbstoffe, Katalysatoren, Licht- und Hitzestabilisatoren, Antioxidantien und/oder Effektadditive enthalten sind.

13. Transparenter oder pigmentierter Pulverlacke nach mindestens einem der vorherigen Ansprüche,
**dadurch gekennzeichnet,**
**dass** das Mischungsverhältnis des sauren Polyesters und des β-Hydroxyalkylamids so gewählt wird, dass das Verhältnis Carboxylgruppen zu Hydroxylgruppen 0,4: 1 bis 2,0 : 1 beträgt.

14. Transparenter oder pigmentierter Pulverlack nach mindestens einem der vorherigen Ansprüche,
**dadurch gekennzeichnet,**
**dass** das β-Hydroxyalkylamid die folgende Formel I aufweist 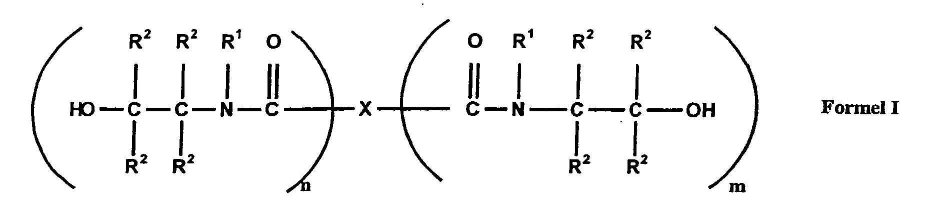 wobei die Substituenten die folgenden Bedeutungen haben:
X: chemische Bindung, Wasserstoff oder eine einwertige oder mehrwertige organische Gruppe, abgeleitet aus gesättigten, ungesättigten oder aromatischen Kohlenwasserstoffgruppen, mit 1-24 Kohlenstoffatomen oder diese heteroatomsubstituierten Reste;
R¹: Wasserstoff, Alkyl-, Alkenyl-, Aryl- oder Aralkylrest mit 1-24 Kohlenstoff-atomen, diese heteroatomsubstituierten Reste oder 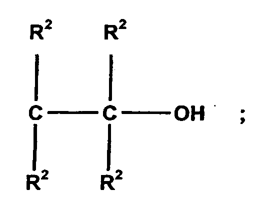
R²: unabhängig voneinander gleiche oder verschiedene Reste, ausgewählt aus Wasserstoff, Alkyl-, Aryl-, Aralkyl- oder Alkenylrest mit 1-24 Kohlenstoff-atomen oder diese heteroatomsubstituierten Reste;
n: ganze Zahl von 1 - 10;
m: ganze Zahl von 0 - 2;
n+m: ≥2.

15. Verwendung eines carboxylgruppenhaltigen Polyesters mit ß-Hydroxyalkylamiden zur Herstellung transparenter oder pigmentierter Pulverlacke,
wobei der Polyester hergestellt wird durch Kondensation von
A) mindestens einem aliphatischen und/oder cycloaliphatischen Di- und/oder Polyol mit
B) mindestens einer aliphatischen und/oder cycloaliphatischen und/oder aromatischen Di- und/oder Polycarbonsäure
und
C) mindestens einem aliphatischen und/oder cycloaliphatischen und/oder aromatischen Di- und/oder Polycarbonsäureester;
und dieser Polyester eine Glasübergangstemperatur von 30 bis 90 °C und eine Säurezahl von 10 bis 150 mg KOH/g aufweist.

16. Verwendung eines Carboxylgruppen haltigen Polyesters mit β-Hydroxyalkylamiden zur Herstellung transparenter oder pigmentierter Pulverlacke nach Anspruch 15,
**dadurch gekennzeichnet,**
**dass** der Polyester hergestellt wird durch Kondensation von
A) mindestens einem aliphatischen und/oder cycloaliphatischen Di- und/oder Polyol mit
B) mindestens einer aliphatischen und/oder aromatischen Di- und/oder Polycarbonsäure und
C) mindestens einem aliphatischen und/oder aromatischen Di- und/oder Polycarbonsäureester.
und dieser Polyester eine Glasübergangstemperatur von 30 bis 90 °C und eine Säurezahl von 10 bis 150 mg KOH/g besitzt.

17. Verwendung eines carboxylgruppenhaltigen Polyesters mit β-Hydroxyalkylamiden zur Herstellung transparenter oder pigmentierter Pulverlacke nach Anspruch 15 bis 16,
**dadurch gekennzeichnet,**
**dass** der Polyester hergestellt wird durch Kondensation von
A) mindestens einem aliphatischen und/oder cycloaliphatischen Di- und/oder Polyol mit
B) mindestens einer aromatischen Di- und/oder Polycarbonsäure und
C) mindestens einem aromatischen Di- und/oder Polycarbonsäureester, und dieser Polyester eine Glasübergangstemperatur von 30 bis 90 °C und eine Säurezahl von 10 bis 150 mg KOH/g aufweist.

18. Verwendung eines carboxylgruppenhaltigen Polyesters mit β-Hydroxyalkylamiden zur Herstellung transparenter oder pigmentierter Pulverlacke nach mindestens einem der Ansprüche 15 bis 17, **dadurch gekennzeichnet,**
**dass** als Komponente A Polyole ausgewählt aus Monoethylenglykol, 1,2-Propylenglykol, 1,3-Propylenglykol, 1,4-Butylenglykol, 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), Bis-(1,4-hydroxymethyl)-cyclohexan, 2,2-Bis-(4-hydroxycyclohexyl)-propan, 2,2-Bis-[4-(β-hydroxyethoxy)-phenyl]-propan, 2-Methyl-propandiol-1,3, 2-Methyl-pentandiol-1,5, 2,2,4(2,4,4)-Trimethylhexandiol-1,6, Glyzerin, Trimethylolpropan, Trimethylolethan, Hexantriol-1,2,6, Butantriol-1,2,4, Tris-(β-hydroxyethyl)-isocyanurat, Pentaerythrit, Mannit, Sorbit, Diethylenglykol, Triethylenglykol, Tetraethylenglykol, Dipropylenglykol, Polypropylenglykole, Polybutylenglykole, Xylylenglykol oder Hydroxypivalinsäureneopentylglykolester verwendet werden.

19. Verwendung eines carboxylgruppenhaltigen Polyesters mit β-Hydroxyalkylamiden zur Herstellung transparenter oder pigmentierter Pulverlacke nach mindestens einem der Ansprüche 15 bis 18,
**dadurch gekennzeichnet,**
**dass** als Komponente B mindestens eine der Carbonsäuren ausgewählt aus Bernstein-, Adipin-, Kork-, Azelain, Sebacin-, Phthal-, Terephthal-, Isophthal-, Trimellit-, Pyromellit-, Tetrahydrophthal-, Hexahydrophthal-, Hexahydroterephthal-, Dichlorphthal-, Tetrachlorphthal-, Endomethylentetrahydrophthal-, Glutarsäure oder 1,4-Cyclohexandicarbonsäure verwendet wird.

20. Verwendung eines carboxylgruppenhaltigen Polyesters mit β-Hydroxyalkylamiden zur Herstellung transparenter oder pigmentierter Pulverlacke nach mindestens einem der Ansprüche 15 bis 19,
**dadurch gekennzeichnet,**
**dass** als Komponente B mindestens eine der Carbonsäuren ausgewählt aus Isophthalsäure, Terephthalsäure, Hexahydroterephthalsäure, Hexahydrophthalsäure, Adipinsäure oder Bernsteinsäure verwendet wird.

21. Verwendung eines carboxylgruppenhaltigen Polyesters mit ß-Hydroxyalkylamiden zur Herstellung transparenter oder pigmentierter Pulverlacke nach mindestens einem der Ansprüche 15 bis 20,
**dadurch gekennzeichnet,**
**dass** als Komponente B mindestens eine der Carbonsäuren ausgewählt aus Isophthalsäure oder Terephthalsäure verwendet wird.

22. Verwendung eines carboxylgruppenhaltigen Polyesters mit β-Hydroxyalkylamiden zur Herstellung transparenter oder pigmentierter Pulverlacke nach mindestens einem der Ansprüche 15 bis 21,
**dadurch gekennzeichnet,**
**dass** als Komponente C mindestens eine Carbonsäureester ausgewählt aus Bernstein-, Adipin-, Kork-, Azelain, Sebacin-, Phthal-, Terephthal-, Isophthal-, Trimellit-, Pyromellit-, Tetrahydrophthal-, Hexahydrophthal-, Hexahydroterephthal-, Dichlorphthal-, Tetrachlorphthal-, Endomethylentetrahydrophthal-, Glutarsäure, 1,4-Cyclohexandicarbonsäureester verwendet wird.

23. Verwendung eines carboxylgruppenhaltigen Polyesters mit β-Hydroxyalkylamiden zur Herstellung transparenter oder pigmentierter Pulverlacke nach mindestens einem der Ansprüche 15 bis 22,
**dadurch gekennzeichnet,**
**dass** als Komponente C mindestens eine Carbonsäurenester ausgewählt aus Isophthalsäure-, Terephthalsäure-, Hexahydroterephthalsäure-, Hexahydrophthalsäure-, Adipinsäure- oder Bemsteinsäureester verwendet wird.

24. Verwendung eines carboxylgruppenhaltigen Polyesters mit β-Hydroxyalkylamiden zur Herstellung transparenter oder pigmentierter Pulverlacke nach mindestens einem der Ansprüche 15 bis 23,
**dadurch gekennzeichnet,**
**dass** als Komponente C mindestens ein Carbonsäureester ausgewählt aus Isophthalsäureoder Terephthalsäureester verwendet wird.

25. Verwendung eines carboxylgruppenhaltigen Polyesters mit β-Hydroxyalkylamiden zur Herstellung transparenter oder pigmentierter Pulverlacke nach mindestens einem der Ansprüche 15 bis 24,
**dadurch gekennzeichnet,**
**dass** als β-Hydroxyalkylamid VESTAGON EP-HA 320, PRIMID XL-552, PRIMID QM 1260, PRIMID SF 4510, PROSID H oder PROSID S eingesetzt wird.

26. Verwendung eines carboxylgruppenhaltigen Polyesters mit β-Hydroxyalkylamiden zur Herstellung transparenter oder pigmentierter Pulverlacke nach mindestens einem der Ansprüche 15 bis 25,
**dadurch gekennzeichnet,**
**dass** Hilfs- und Zuschlagstoffe ausgewählt . aus der Gruppe der Verlaufmittel, Entgasungsmittel, Füllstoffe, Farbstoffe, Katalysatoren, Licht- und Hitzestabilisatoren, Antioxidantien und/oder Effektadditive enthalten sind.

27. Verwendung eines carboxylgruppenhaltigen Polyesters mit β-Hydroxyalkylamiden zur Herstellung transparenter oder pigmentierter Pulverlacke nach mindestens einem der Ansprüche 15 bis 26,
**dadurch gekennzeichnet,**
**dass** das Mischungsverhältnis des sauren Polyesters und des β-Hydroxyalkylamids so gewählt wird, dass das Verhältnis Carboxylgruppen zu Hydroxylgruppen 0,4 : 1 bis 2,0 : 1 beträgt.

28. Verwendung eines carboxylgruppenhaltigen Polyesters mit β-Hydroxyalkylamiden zur Herstellung transparenter oder pigmentierter Pulverlacke nach mindestens einem der Ansprüche 15 bis 26,
**dadurch gekennzeichnet,**
**dass** das β-Hydroxyalkylamid die folgende Formel I aufweist 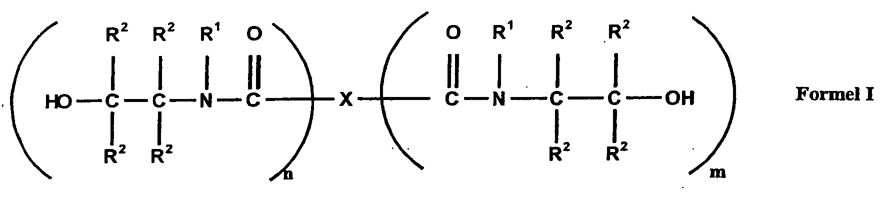 wobei die Substituenten die folgenden Bedeutungen haben:
X: chemische Bindung, Wasserstoff oder eine einwertige oder mehrwertige organische Gruppe, abgeleitet aus gesättigten, ungesättigten oder aromatischen Kohlenwasserstoffgruppen, mit 1-24 Kohlenstoffatomen oder diese heteroatomsubstituierten Reste;
R¹: Wasserstoff, Alkyl-, Alkenyl-, Aryl- oder Aralkylrest mit 1-24 Kohlenstoff-atomen, diese heteroatomsubstituierten Reste oder 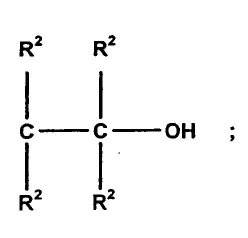
R²: unabhängig voneinander gleiche oder verschiedene Reste, ausgewählt aus Wasserstoff, Alkyl-, Aryl-, Aralkyl- oder Alkenylrest mit 1 - 24 Kohlenstoff-atomen oder diese heteroatomsubstituierten Reste;
n: ganze Zahl von 1- 10;
m: ganze Zahl von 0 - 2;
n+m: ≥2.
